(19) Europäisches Patentamt
European Patent Office
Office européen des brevets

(11) EP 1 691 141 B1

(12) **EUROPEAN PATENT SPECIFICATION**

(45) Date of publication and mention of the grant of the patent:
**11.06.2008 Bulletin 2008/24**

(51) Int Cl.:
***F24F 11/00*** *(2006.01)*

(21) Application number: **05008178.5**

(22) Date of filing: **14.04.2005**

(54) **Method for controlling air conditioning system**

Verfahren zur Steuerung einer Klimaanlage

Procédé pour contrôler un système de climatisation

(84) Designated Contracting States:
**DE FR GB**

(30) Priority: **15.02.2005 KR 2005012308**

(43) Date of publication of application:
**16.08.2006 Bulletin 2006/33**

(73) Proprietor: **LG ELECTRONICS INC.**
**Seoul 150-721 (KR)**

(72) Inventors:
- **Lee, Ju, Youn**
  **Dongjak-gu**
  **Seoul (KR)**
- **Choi, Ho, Seon**
  **Dongjak-gu**
  **Seoul (KR)**

(74) Representative: **Schorr, Frank Jürgen et al**
**Diehl & Partner,**
**Augustenstrasse 46**
**80333 München (DE)**

(56) References cited:
**US-A- 4 873 649**

- **PATENT ABSTRACTS OF JAPAN vol. 1995, no. 04, 31 May 1995 (1995-05-31) & JP 07 012387 A (MATSUSHITA REFRIG CO LTD), 17 January 1995 (1995-01-17)**
- **PATENT ABSTRACTS OF JAPAN vol. 1999, no. 09, 30 July 1999 (1999-07-30) & JP 11 108418 A (NKS KK), 23 April 1999 (1999-04-23)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to air conditioners, and more particularly, to a method for controlling an air conditioning system for improving an IAQ (Indoor Air Quality).

Recently, people pass around 80% of one day in room spaces, such as houses, offices, and underground spaces. With regard to the people who pass most of their time in room spaces, a comfortable room environment can enhance efficiency of their work, and, moreover, is very important for maintaining their health.

Particularly, as living standards of people become the higher, demands for the comfortable room space of the people become the higher.

In general, the increase of a carbon dioxide content of air in a closed room as time passes-by by respiration of people in the room, and the rapid increase of heat load of an office caused by office automation and concentration coming from high land price causes unpleasant feeling of the people in the room.

In order to resolve the unpleasant feeling, and provide a more comfortable room environment, the air conditioning system is used widely, for controlling a temperature, humidity, and so on.

However, there has been a limitation in effective control of the air conditioning system by taking all correlation between a human heat sense and physical environments, such as a room temperature, humidity, air flow speed, a radiation temperature into account.

Therefore, for quantitative expression of influences of composite parameters of a thermal environment to a human body, and for suggesting a range of comfortable thermal environment by using this, there have been many indices of the thermal environment developed and used.

Of the indices, as typical thermal environment indices, there are a New Effective Temperature (ET) used in the USA lead by ASHRAE (American Society of Heating, Refrigerating and Air-Conditioning Engineers), and a Predicted Mean Vote (PMV) and a Predicted Percentage of Dissatisfied (PPD) employed as ISO (the International Organization for Standardization) 7730, and used in Europe.

The Predicted Mean Vote (PMV) is an index for theoretical prediction of a sense of optimum comfort a human being feels by measuring six thermal environment parameters of the human being, and environment of an air temperature, humidity, an air flow speed, a mean radiation temperature, a wearing clothes amount, and an activity, and substituting the parameters for an equation based on thermal equilibrium of a human body.

The Predicted Percentage of Dissatisfied (PPD) expresses a predicted percentage of people who are not satisfied with the present environment through heat sense scales set as "hot", "warm", "slightly warm", "neutral(0)", "slightly cool", "cool", "cold", and so on according to the PMV.

FIG. 1 illustrates a graph of a comfort zone of ISO-7730 according to the PMV and the PPD, wherein a comfort zone is set within conditions of $-0.5 < PMV < +0.5$, and $PPD < 10\%$.

That is, by controlling the air conditioning system such that the room temperature and humidity satisfy above PMV and PPD, better comfort can be provided to the people in the room.

However, the related art air conditioning system (see for example patent document US-A-4 873 649) has the following problem.

First, there has been a limitation in resolution of an unpleasant feeling the people in the room have, and providing a higher comfort to the people in the room, only by application of the PMV and the PPD.

Second, if the air conditioning system fails to sense the sensitive room environment properly, the people in the room are liable to live in the unpleasant environment.

Accordingly, the present invention is directed to a method for controlling an air conditioning system that substantially obviates one or more problems due to limitations and disadvantages of the related art.

An object of the present invention is to provide a method for controlling an air conditioning system for improving an air conditioning performance and IAQ taking a room environment into account to the maximum.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for controlling an air conditioning system includes the steps of measuring a Predicted Mean Vote (PMV) according to thermal environmental parameters of a room, performing a first air conditioning mode if the PMV falls outside of a preset allowable range, for controlling an air flow speed and a room temperature, and performing a second air conditioning mode if the PMV falls within the allowable range, for controlling ventilation and air cleaning operation.

The step of performing a first air conditioning mode includes the steps of detecting the present room temperature and an activity of people in the room if the PMV falls outside of the allowable range, determining the air flow speed and the room temperature according to the detected temperature and the activity, and operating the air conditioner according to the determined air flow speed and the room temperature.

The step of performing a second air conditioning mode includes the steps of performing a ventilating mode according to a carbon dioxide concentration of the room if the PMV is within the allowable range, and performing an air cleaning mode according to an oxygen concentration of the room after the ventilating mode is performed.

The step of performing a ventilating mode according to a carbon dioxide concentration includes the steps of detecting the present carbon dioxide concentration of the room, determining the detected carbon dioxide concentration of being over a preset reference value, and performing a ventilating mode if the carbon dioxide concentration is over the reference value, in which introduction of outdoor air and discharge of room air are repeated.

The step of performing an air cleaning mode according to an oxygen concentration includes the steps of detecting the present oxygen concentration of the room, determining the detected oxygen concentration of being below a preset reference value, and performing an oxygen generating mode if the oxygen concentration is below the reference value, for generating oxygen.

The step of performing an air cleaning mode according to an oxygen concentration further includes the steps of performing a terpene generating mode for generating terpene after the oxygen generating mode is performed.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a graph of a comfort zone of ISO-7730 according to the PMV and the PPD;
FIG. 2 illustrates a flow chart showing the steps of a method for controlling air cleaning by an air conditioner of the present invention;
FIG. 3 illustrates a flow chart showing detailed steps of a method for controlling the first air conditioning mode in FIG. 2;
FIG. 4 illustrates a diagram of a lookup table for determining an air flow speed and a temperature of an air conditioner in view of a room temperature and an activity of people in a room;
FIG. 5 illustrates a flow chart showing detailed steps of a method for controlling the second air conditioning mode in FIG. 2; and
FIGS. 6A and 6B illustrate diagrams each showing a PPIS (Predicted Percentage Indoor Satisfied) test result depending on existence of terpene.

Reference will now be made in detail to the preferred embodiments of the present invention, examples of which are illustrated in the accompanying drawings. Wherever possible, the same reference numbers will be used throughout the drawings to refer to the same or like parts.

At first, the air conditioning system of the present invention measures the present PMV of a room from thermal environment parameters of human being, and environment of an air temperature, humidity, an air flow speed, a mean radiation temperature, a wearing clothes amount, and an activity amount.

To do this, the air conditioning system of the present invention includes 6 kinds of sensing means which can measure the six kinds of thermal environmental parameters.

For an example, the room temperature can be measured with a temperature sensor, and a mean radiation temperature can be calculated by using the room temperature detected at the temperature sensor.

Moreover, the relative humidity of the room can be detected with a humidity sensor, and the air flow speed of the room can be calculated from a rotating speed of air supply/discharge fans of the air conditioner.

In the case of the wearing clothes amount, it can be determined with reference to a measured value of the temperature sensor, and the activity can be detected through a MET (Metabolic) sensor.

In the meantime, the PPIS is determined according to concentrations of carbon dioxide $CO_2$, oxygen $O_2$, and terpene, together with the PPD, which can be defined as follows.

$$PPIS = [(-30.1-0.000667* CO_2 + 1.50* O_2 + 0.800*Terpene/2) + 3]$$

$$*100/5 + (100-PPD/2) \quad \text{--------------------------------------------} \quad (1)$$

The present invention provides a method for controlling an air conditioner, which can provides a room air environment that satisfies an optimum PMV (i.e., -1<PMV<1) and a PPIS higher than 80%.

The method for controlling an air conditioning system of the present invention will be described with reference to FIGS. 2 and 6.

Referring to FIG. 2, upon putting the air conditioning system into operation, the present PMV is measured according to the six kinds of thermal environmental parameters before performing an air conditioning mode (S10).

The PMV measured thus is determined of being within the preset allowable range (-1<PMV<1) (S30).

As a result of the determination (S30), if the present room PMV falls outside of the preset allowable range (-1<PMV<1) (S30), a first air conditioning mode is performed, in which an air flow speed and a temperature of the air conditioner is controlled according to the present room air temperature and the activity of people in the room (S50).

During performing the first air conditioning mode, the room PMV is measured, periodically.

In the meantime, as result of the determination, if the present room PMV is within the allowable range, or reaches to the allowable range as the first air conditioning mode is performed, a second air conditioning mode is performed, in which ventilation and air cleaning operation is controlled according to concentrations of carbon dioxide and oxygen in the room (S70).

The foregoing first air conditioning mode will be described in more detail, with reference to FIG. 3.

Referring to FIG 3, if the present room PMV falls outside of the allowable range (-1<PMV<1), such that the air conditioning operation proceeds to the first air conditioning mode, the present room temperature is detected with the temperature sensor at the air conditioner, and the activity of people in the room is detected by using the MET sensor (S51).

Levels of the detected room temperature and the activity are selected from references defined in advance.

For an example, it is defined that the room temperature, below 15°C is 'A', between 15~ 19°C is 'B', between 19 ~ 23°C is 'C', between 23 ~ 25°C is 'D', and higher than 25°C is 'E' (S52).

It is defined that the activity, below a preset reference value is 'AA', and higher than the preset reference value is 'BB' (S53).

That is, levels of the room temperature and the activity detected in the step S51 are selected from the preset references of determination (S52), and (S53).

Then, the flow speed and the temperature of the air conditioner are determined according to the determined room temperature and activity.

The flow speed and temperature, which are objects of control in the first air conditioning mode, have proper levels at which the PMV of the room can be improved found through repeated tests under various environments having a variety of room temperatures and activities of people in the room, and formulated as the lookup table shown in FIG. 4. The lookup table in FIG. 4 is variable as many as required depending on the room environment and product design.

Accordingly, the flow speed and temperature of the air conditioner are selected from the levels of the present room temperature and activity in the lookup table.

In detail, if the room temperature detected presently falls on 'A', the air conditioner has an air flow speed set to 'breeze (0.2m/s)', and a temperature raised to a predetermined level (for an example, 2°C) regardless of the activity of the people in the room (S54, and S55).

In the meantime, if the room temperature detected presently falls on 'B' (S56), and the activity of the people in the room falls on 'AA' (S57), the air conditioner has the air flow speed set to 'breeze (0.2m/s)', and a temperature raised by 2°C (S58). If the activity of the people in the room falls on 'BB' (S57), the temperature is maintained as it is, while the air flow speed is set to 'weak wind (0.4m/s)' (S59).

If the room temperature detected presently falls on 'C' (S60), and the activity of the people in the room falls on 'AA', the air conditioner has the air flow speed set to 'breeze (0.2m/s)', and a temperature raised by 2°C (S61)(S62). If the activity of the people in the room falls on 'BB', the temperature is maintained as it is, while the air flow speed is set to 'strong wind (0.6m/s)' (S63).

If the room temperature detected presently falls on 'D' (S64), and the activity of the people in the room falls on 'AA' (S65), the air conditioner has the air flow speed set to 'breeze (0.2m/s)', and a temperature raised by 2°C (S66). If the activity of the people in the room falls on 'BB', the temperature is maintained as it is, while the air flow speed is set to 'strong wind (0.6m/s)' (S67).

If the room temperature detected presently falls on 'E' (S64), and the activity of the people in the room falls on 'AA', the air conditioner has the air flow speed set to 'breeze (0.2m/s)', and the temperature maintained as it is (S68) (S69). If the activity of the people in the room falls on 'BB', the air flow speed is set to 'strong wind (0.6m/s)' (S67).

Thus, in the first air conditioning mode of the present invention, air conditioning is performed by controlling the air flow speed and the temperature of the air conditioner according to the room temperature and the activity of the people in the room.

Then, after performing the first air conditioning mode for a preset time period at the air flow speed and temperature determined according to the room temperature and activity of people in the room, the operation returns to an initial step (S10), and the PMV is checked periodically.

If the present PMV reaches to the allowable range (-1 ~ +1) as the first air conditioning mode is performed, the first air conditioning mode is stopped, and the second air conditioning mode is performed.

In the second air conditioning mode of the present invention, either a ventilating mode is performed according to concentrations of carbon dioxide, and oxygen in the room, or an air cleaning mode in which oxygen or terpene is generated.

For this, the air conditioner of the present invention includes gas sensors for measuring concentrations of carbon dioxide and oxygen of room air, and further includes oxygen generating means and terpene generating means for generating oxygen or terpene.

The second air conditioning mode will be described in detail with reference to FIG. 5.

Once the PMV reaches to the allowable range, to proceed to the second air conditioning mode, the concentration of carbon dioxide in the room is detected (S71).

The detected carbon dioxide concentration has a level determined according to a preset reference. For an example, it is defined as 'WW', if the carbon dioxide concentration is below 1000ppm, and it is defined as 'XX', if the carbon dioxide concentration is over 1000ppm (S72).

If the carbon dioxide concentration detected in the step (S71) falls on 'XX' (over 1000ppm) according to the reference, the ventilating mode, in which the room is ventilated by repeating introduction of outdoor air, and discharge of room air, is performed at 'strong wind' (S73)(S75).

After performing such a ventilating mode for a present time period, the operation returns to the step (S73), to check the carbon dioxide concentration in the room, and above steps are repeated.

In the meantime, if the present carbon dioxide concentration is below 'WW (below 1000ppm)', the present oxygen concentration of the room is detected(S76) in a state the ventilating mode is turned off (S74).

Alikely, the detected oxygen concentration has a level determined according to a preset reference. For an example, it is defined as 'YY' if the oxygen concentration is below 20.9%, and 'ZZ' if the oxygen concentration is higher than 20.9% (S77).

If the oxygen concentration detected in the step (S76) according to the reference falls on 'YY' (below 20.9%), the oxygen generating means is controlled, to perform an oxygen generating mode for supplying oxygen to the room (S78)(S79).

After the oxygen generating mode (S79) is performed for a preset time period, the operation returns to the step (S76) for checking the oxygen concentration of the room air, again.

In the meantime, if the detected oxygen concentration falls on 'ZZ (over 20.9%)', in a state the oxygen generating mode is turned off (S80) because an oxygen content of the room air is adequate, a terpene generating mode is performed for a preset time period, for generating an aromatic component of terpene (S81).

The terpene is generated in the step the second air conditioning mode is performed, as one of methods for improving IAQ, further.

FIGS. 6A and 6B illustrate diagrams showing PPIS test results with air with/without terpene therein, respectively, wherein it can be noted that the PPIS over 80% is measured in a room with terpene more frequently than a room without terpene.

Accordingly, the present invention improves the PPIS further by controlling the temperature and the air flow speed so that the PMV reaches to an optimum range, and, thereafter, by controlling ventilation according to the carbon dioxide concentration, and generating active materials such as oxygen/terpene.

As has been described, the method for controlling an air conditioning system of the present invention has the following advantages.

The IAQ (Indoor Air Quality) can be improved further by enhancing the PPIS by performing air conditioning so that the PMV reaches to an optimum range, and then, by generating active materials (oxygen/terpene).

The comfort satisfaction of the people in the room can be maximized by performing air conditioning with reference to the PMV and the PPIS, to improve room air properties.

It will be apparent to those skilled in the art that various modifications and variations can be made in the present invention without departing from the scope of the present invention. Thus, it is intended that the present invention covers the modifications and variations of this invention provided they come within the scope of the appended claims and their equivalents.

In summary, the present invention discloses a method for controlling an air conditioning system including the steps of measuring a Predicted Mean Vote (PMV) according to thermal environmental parameters of a room, performing a first air conditioning mode if the PMV falls outside of a preset allowable range, for controlling an air flow speed and a room temperature, and performing a second air conditioning mode if the PMV falls within the allowable range, for controlling ventilation and air cleaning operation, whereby improving the IAQ (Indoor Air Quality) further by enhancing the PPIS by performing air conditioning so that the PMV reaches to an optimum range, and then, by generating active materials (oxygen/terpene).

## Claims

1. A method for controlling an air conditioning system comprising the steps of:

   measuring (S10) a Predicted Mean Vote (PMV) according to thermal environmental parameters of a room;
   performing a first air conditioning mode (S50) if the PMV falls outside of a preset allowable range, for controlling an air flow speed and a room temperature; and
   performing a second air conditioning mode (S70) if the PMV falls within the allowable range, for controlling ventilation and air cleaning operation.

2. The method as claimed in claim 1, wherein the thermal environmental parameters include at least one of an air temperature, humidity, an air flow speed, a mean radiation temperature, a wearing clothes amount, and activity.

3. The method as claimed in claim 1 or 2, wherein the step of performing a first air conditioning mode (S50) includes the steps of;

   (S51) detecting the present room temperature and an activity of people in the room if the PMV falls outside of the allowable range,
   determining the air flow speed and the room temperature according to the detected temperature and the activity, and
   operating the air conditioner according to the determined air flow speed and the room temperature.

4. The method as claimed in claim 1, 2 or 3, wherein the air flow speed and the room temperature, which are object of control in the first air conditioning mode, are determined as values determined in advance according to the detected temperature and the activity.

5. The method as claimed in claim 3 or 4, wherein the step of determining the air flow speed and the room temperature according to the detected temperature and the activity includes the steps of;

   selecting a level of the detected temperature from a plurality of reference levels of temperatures,
   selecting a level of the detected activity from a plurality of reference levels of activities, and
   determining the air flow speed and the room temperature as an air flow speed and a room temperature defined in advance for the selected temperature and the activity.

6. The method as claimed in one of the preceeding claims, wherein the step of performing a first air conditioning mode (S50) further includes the steps of;

   (S51) measuring the PMV of the room periodically during the air conditioner is operating at the determined air flow speed and room temperature,
   determining the measured PMV of falling within the allowable range, and
   operating the air conditioner at the determined air flow speed and room temperature until the PMV reaches to the allowable range.

7. The method as claimed in one of the preceeding claims, wherein the step of performing a second air conditioning mode (S70) includes the steps of;

   performing a ventilating mode according to a carbon dioxide concentration of the room if the PMV is within the allowable range, and
   performing an air cleaning mode according to an oxygen concentration of the room after the ventilating mode is performed.

8. The method as claimed in claim 7, wherein the step of performing a ventilating mode according to a carbon dioxide concentration includes the steps of;

   (S71) detecting the present carbon dioxide concentration of the room
   (S73) determining the detected carbon dioxide concentration of being over a preset reference value, and
   (S75) performing a ventilating mode if the carbon dioxide concentration is over the reference value, in which introduction of outdoor air and discharge of room air are repeated.

**9.** The method as claimed in claims 7 or 8, wherein the step of performing a ventilating mode according to a carbon dioxide concentration includes the steps of;

(S71) detecting a carbon dioxide concentration of the room periodically during the ventilating mode is performed,
(S73) determining the detected carbon dioxide concentration of dropping below a reference value as the ventilating mode is performed, and
(S74) stopping the ventilating mode if the carbon dioxide concentration drops below the reference value.

**10.** The method as claimed in one of claims 7 to 9, wherein the step of performing an air cleaning mode according to an oxygen concentration includes the steps of;

(S76) detecting the present oxygen concentration of the room,
(S78) determining the detected oxygen concentration of being below a preset reference value, and
(S79) performing an oxygen generating mode if the oxygen concentration is below the reference value, for generating oxygen.

**11.** The method as claimed in one of claims 7 to 10, wherein the step of performing an air cleaning mode according to an oxygen concentration includes the steps of;

(S76) detecting the oxygen concentration of the room periodically during the oxygen generating mode is performed,
(S78) determining the detected oxygen concentration rising above the reference value as the oxygen generating mode is performed, and
(S80) stopping the oxygen generating mode if the oxygen concentration rises above the reference value.

**12.** The method as claimed in claim 10 or 11, wherein the step of performing an air cleaning mode according to an oxygen concentration further includes the steps of:

(S81) performing a terpene generating mode for generating terpene after the oxygen generating mode is performed.

**Patentansprüche**

**1.** Verfahren zum Steuern einer Klimaanlage, das folgende Schritte umfasst:

Messen (S10) eines Vorhersageindex' für das persönliche Wohlbefinden (Predicted Mean Vote - PMV) gemäß wärmebezogenen Umgebungsparametern eines Raumes;
Ausführen eines ersten Klimatisierungsmodus' (S50), wenn der PMV außerhalb eines voreingestellten zulässigen Bereichs fällt, zum Steuern einer Luftströmungsgeschwindigkeit und einer Raumtemperatur; und
Ausführen eines zweiten Klimatisierungsmodus' (S70), wenn der PMV innerhalb des zulässigen Bereichs fällt, zum Steuern des Lüftungs- und Luftreinigungsbetriebes.

**2.** Verfahren gemäß Anspruch 1, wobei die wärmebezogenen Umgebungsparameter mindestens eines von Folgenden beinhalten: eine Lufttemperatur, Feuchtigkeit, eine Luftströmungsgeschwindigkeit, eine mittlere Strahlungstemperatur, eine Bekleidungsmenge und eine Aktivität.

**3.** Verfahren gemäß Anspruch 1 oder 2, wobei der Schritt des Ausführens eines ersten Klimatisierungsmodus' (S50) folgende Schritte beinhaltet:

(S51) Detektieren der vorliegenden Raumtemperatur und eine Aktivität von Personen im Raum, wenn der PMV außerhalb des zulässigen Bereichs fällt,
Bestimmen der Luftströmungsgeschwindigkeit und der Raumtemperatur gemäß der detektierten Temperatur und der Aktivität, und
Betreiben der Klimaanlage gemäß der bestimmten Luftströmungsgeschwindigkeit und der Raumtemperatur.

**4.** Verfahren gemäß Anspruch 1, 2 oder 3, wobei die Luftströmungsgeschwindigkeit und die Raumtemperatur, die den Gegenstand der Steuerung im ersten Klimatisierungsmodus bilden, als Werte ermittelt werden, die im Voraus gemäß der detektierten Temperatur und der Aktivität ermittelt werden.

5. Verfahren gemäß Anspruch 3 oder 4, wobei der Schritt des Bestimmens der Luftströmungsgeschwindigkeit und der Raumtemperatur gemäß der detektierten Temperatur und der Aktivität folgende Schritte beinhaltet:

   Auswählen eines Pegels der detektierten Temperatur aus mehreren Referenztemperaturpegeln,
   Auswählen eines Pegels der detektierten Aktivität aus mehreren Referenzaktivitätspegeln, und
   Bestimmen der Luftströmungsgeschwindigkeit und der Raumtemperatur als eine Luftströmungsgeschwindigkeit und eine Raumtemperatur, die im Voraus für die gewählte Temperatur und die Aktivität definiert wurde.

6. Verfahren gemäß einem der vorangehenden Ansprüche, wobei der Schritt des Ausführens eines ersten Klimatisierungsmodus' (S50) des Weiteren folgende Schritte beinhaltet:

   (S51) periodisches Messen des PMV des Raumes, während die Klimaanlage mit der bestimmten Luftströmungsgeschwindigkeit und Raumtemperatur arbeitet,
   Bestimmen, ob der gemessene PMV in den zulässigen Bereich fällt, und
   Betreiben der Klimaanlage mit der bestimmten Luftströmungsgeschwindigkeit und Raumtemperatur, bis der PMV den zulässigen Bereich erreicht.

7. Verfahren gemäß einem der vorangehenden Ansprüche, wobei der Schritt des Ausführens eines zweiten Klimatisierungsmodus' (S70) folgende Schritte beinhaltet:

   Ausführen eines Lüftungsmodus' gemäß einer Kohlendioxidkonzentration des Raumes, wenn der PMV innerhalb des zulässigen Bereichs liegt, und
   Ausführen eines Luftreinigungsmodus' gemäß einer Sauerstoffkonzentration des Raumes, nachdem der Lüftungsmodus ausgeführt wurde.

8. Verfahren gemäß Anspruch 7, wobei der Schritt des Ausführens eines Lüftungsmodus gemäß einer Kohlendioxidkonzentration folgende Schritte beinhaltet:

   (S71) Detektieren der vorliegenden Kohlendioxidkonzentration des Raumes,
   (S73) Bestimmen, ob die detektierte Kohlendioxidkonzentration oberhalb eines voreingestellten Referenzwertes liegt, und
   (S75) Ausführen eines Lüftungsmodus', wenn die Kohlendioxidkonzentration über dem Referenzwert liegt, wobei das Einleiten von Frischluft von draußen und das Austragen von Raumluft wiederholt werden.

9. Verfahren gemäß den Ansprüchen 7 oder 8, wobei der Schritt des Ausführens eines Lüftungsmodus' gemäß einer Kohlendioxidkonzentration folgende Schritte beinhaltet:

   (S71) periodisches Detektieren einer Kohlendioxidkonzentration des Raumes, während der Lüftungsmodus ausgeführt wird,
   (S73) Bestimmen, ob die detektierte Kohlendioxidkonzentration unter einen Referenzwert abfällt, wenn der Lüftungsmodus ausgeführt wird, und
   (S74) Anhalten des Lüftungsmodus', wenn die Kohlendioxidkonzentration unter den Referenzwert abfällt.

10. Verfahren gemäß einem der Ansprüche 7 bis 9, wobei der Schritt des Ausführens eines Luftreinigungsmodus' gemäß einer Sauerstoffkonzentration folgende Schritte beinhaltet:

   (S76) Detektieren der vorliegenden Sauerstoffkonzentration des Raumes,
   (S78) Bestimmen, ob die detektierte Sauerstoffkonzentration unterhalb eines voreingestellten Referenzwertes liegt, und
   (S79) Ausführen eines Sauerstofferzeugungsmodus', wenn die Sauerstoffkonzentration unter dem Referenzwert liegt, um Sauerstoff zu erzeugen.

11. Verfahren gemäß einem der Ansprüche 7 bis 10, wobei der Schritt des Ausführens eines Luftreinigungsmodus' gemäß einer Sauerstoffkonzentration folgende Schritte beinhaltet:

   (S76) periodisches Detektieren der Sauerstoffkonzentration des Raumes, während der Sauerstofferzeugungsmodus ausgeführt wird,
(S78) Bestimmen, ob die detektierte Sauerstoffkonzentration über den Referenzwert ansteigt, wenn der Sauerstofferzeugungsmodus ausgeführt wird, und
(S80) Anhalten des Sauerstofferzeugungsmodus', wenn die Sauerstoffkonzentration über den Referenzwert ansteigt.

**12.** Verfahren gemäß Anspruch 10 oder 11, wobei der Schritt des Ausführens eines Luftreinigungsmodus' gemäß einer Sauerstoffkonzentration des Weiteren folgenden Schritt beinhaltet:

(S81) Ausführen eines Terpen-Erzeugungsmodus' zum Erzeugen von Terpen, nachdem der Sauerstofferzeugungsmodus ausgeführt wurde.

**Revendications**

**1.** Procédé de commande d'un système de climatisation comprenant les étapes consistant à :

- mesurer (S 10) un Vote Moyen Prédit (PMV) selon des paramètres environnementaux thermiques d'une pièce ;
- exécuter un premier mode de climatisation (S50) si le PMV se situe à l'extérieur d'une plage prédéfinie admissible, pour commander une vitesse de flux d'air et une température ambiante ; et
- exécuter un second mode de climatisation (S70) si le PMV se situe dans la plage admissible, pour commander une opération de ventilation et de nettoyage de l'air.

**2.** Procédé selon la revendication 1, dans lequel les paramètres environnementaux thermiques comprennent au moins un paramètre parmi la température de l'air, l'humidité, une vitesse de flux d'air, une température moyenne de rayonnement, une quantité de vêtements portés, et l'activité.

**3.** Procédé selon la revendication 1 ou 2, dans lequel l'étape consistant à exécuter un premier mode de climatisation (S50) comprend les étapes consistant à :

- (S51) détecter la température ambiante actuelle et une activité de personnes dans la pièce si le PMV se situe à l'extérieur de la plage admissible,
- déterminer la vitesse de flux d'air et la température ambiante selon la température et l'activité détectées, et
- faire fonctionner le climatiseur selon la vitesse de flux d'air et la température ambiante déterminées.

**4.** Procédé selon la revendication 1, 2 ou 3, dans lequel la vitesse de flux d'air et la température ambiante, qui sont l'objet de la commande dans le premier mode de climatisation, sont déterminées en tant que valeurs déterminées à l'avance selon la température et l'activité détectées.

**5.** Procédé selon la revendication 3 ou 4, dans lequel l'étape consistant à déterminer la vitesse de flux d'air et la température ambiante selon la température et l'activité détectées comprend les étapes consistant à :

- sélectionner un niveau de la température détectée parmi une pluralité de niveaux de référence de températures,
- sélectionner un niveau de l'activité détectée parmi une pluralité de niveaux de référence d'activités, et
- déterminer la vitesse de flux d'air et la température ambiante en tant qu'une vitesse de flux d'air et une température ambiante définies à l'avance pour la température et l'activité sélectionnées.

**6.** Procédé selon l'une quelconque des revendications précédentes, dans lequel l'étape consistant à exécuter un premier mode de climatisation (S50) comprend, en outre, les étapes consistant à :

- (S51) mesurer périodiquement le PMV de la pièce pendant que le climatiseur fonctionne à la vitesse de flux d'air et la température ambiante déterminées,
- déterminer si le PMV mesuré se situe dans la plage admissible, et
- faire fonctionner le climatiseur à la vitesse de flux d'air et la température ambiante déterminées jusqu'à ce que le PMV atteigne la plage admissible.

**7.** Procédé selon l'une quelconque des revendications précédentes, dans lequel l'étape consistant à exécuter un second mode de climatisation (S70) comprend les étapes consistant à :

- exécuter un mode de ventilation selon une concentration en dioxyde de carbone de la pièce si le PMV est dans la plage admissible, et
- exécuter un mode de nettoyage de l'air selon une concentration en oxygène de la pièce après que le mode de ventilation a été exécuté.

**8.** Procédé selon la revendication 7, dans lequel l'étape consistant à exécuter un mode de ventilation selon une concentration en dioxyde de carbone comprend les étapes consistant à :

- (S71) détecter la concentration en dioxyde de carbone présent de la pièce,
- (S73) déterminer si la concentration en dioxyde de carbone détectée se situe au-delà d'une valeur de référence prédéfinie, et
- (S75) exécuter un mode de ventilation si la concentration en dioxyde de carbone est au-delà d'une valeur de référence, dans lequel une introduction d'air extérieur et une évacuation de l'air de la pièce sont répétées.

**9.** Procédé selon les revendications 7 ou 8, dans lequel l'étape consistant à exécuter un mode de ventilation selon une concentration en dioxyde de carbone comprend les étapes consistant à :

- (S71) détecter périodiquement une concentration en dioxyde de carbone de la pièce pendant que le mode de ventilation est exécuté,
- (S73) déterminer si la concentration en dioxyde de carbone détectée descend en dessous d'une valeur de référence lorsque le mode de ventilation est exécuté, et
- (S74) arrêter le mode de ventilation si la concentration en dioxyde de carbone descend en dessous de la valeur de référence.

**10.** Procédé selon l'une des revendications 7 à 9, dans lequel l'étape consistant à exécuter un mode de nettoyage de l'air selon une concentration en oxygène comprend les étapes consistant à :

- (S76) détecter la concentration en oxygène présent de la pièce.
- (S78) déterminer si la concentration en oxygène détectée se situe en dessous d'une valeur de référence prédéfinie, et
- (S79) exécuter un mode de génération d'oxygène si la concentration en oxygène se situe en dessous de la valeur de référence, afin de générer de l'oxygène.

**11.** Procédé selon l'une des revendications 7 à 10, dans lequel l'étape consistant à exécuter un mode de nettoyage de l'air selon une concentration en oxygène comprend les étapes consistant à :

- (S76) détecter périodiquement la concentration en oxygène de la pièce pendant que le mode de génération d'oxygène est exécuté,
- (S78) déterminer si la concentration en oxygène détectée s'élève au-dessus de la valeur de référence lorsque le mode de génération d'oxygène est exécuté, et
- (S80) arrêter le mode de génération d'oxygène si la concentration en oxygène s'élève au-dessus de la valeur de référence.

**12.** Procédé selon les revendications 10 ou 11, dans lequel l'étape consistant à exécuter un mode de nettoyage de l'air selon une concentration en oxygène comprend en outre l'étape consistant à ;

- (S81) exécuter un mode de génération de terpène afin de générer du terpène après que le mode de génération d'oxygène a été exécuté.

FIG. 1

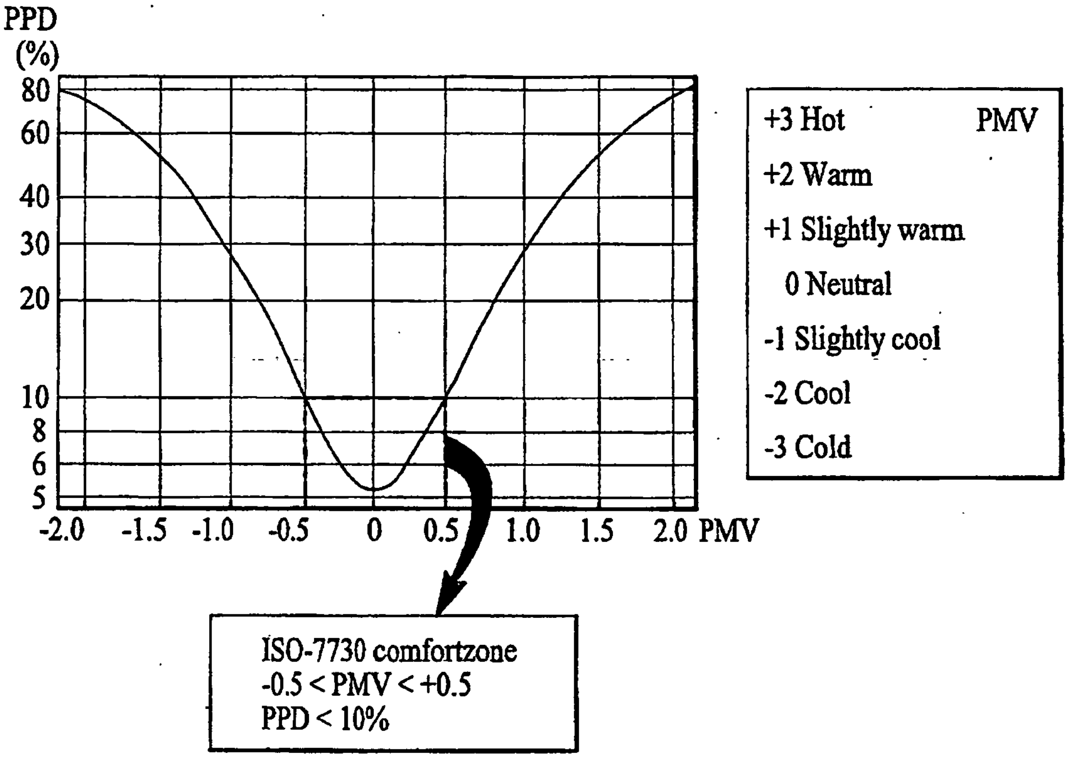
PPD
(%)
80
60
40
30
20
10
8
6
5
-2.0 -1.5 -1.0 -0.5 0 0.5 1.0 1.5 2.0 PMV
+3 Hot PMV
+2 Warm
+1 Slightly warm
0 Neutral
-1 Slightly cool
-2 Cool
-3 Cold
ISO-7730 comfortzone
-0.5 < PMV < +0.5
PPD < 10%

FIG. 2

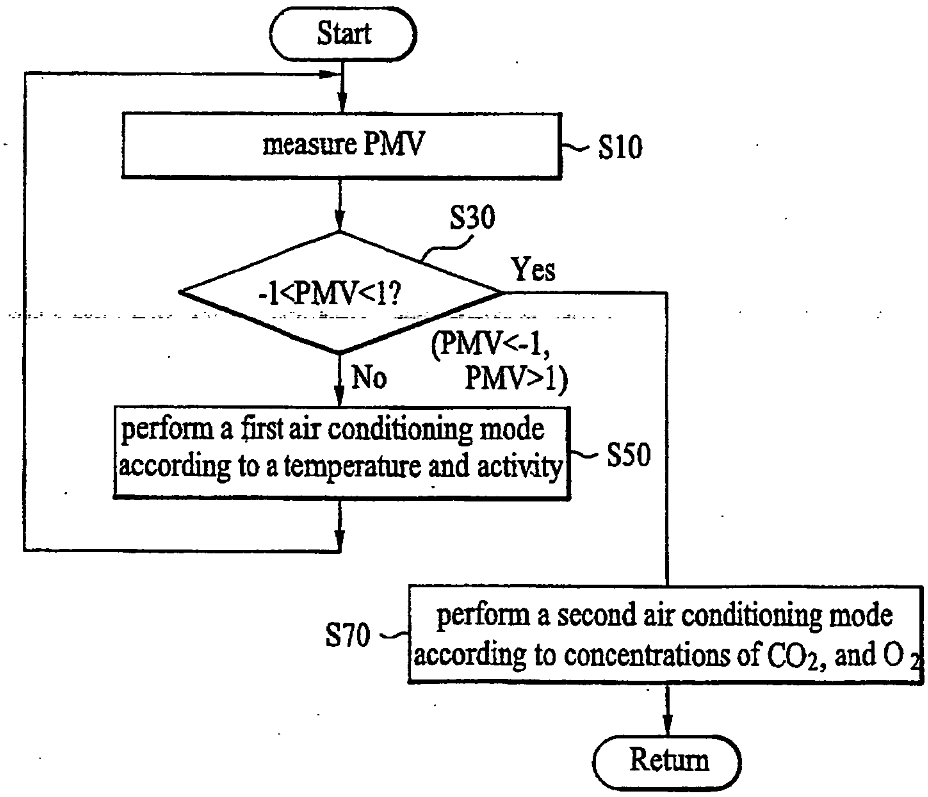
Start
measure PMV
S10
S30
-1<PMV<1?
Yes
No
(PMV<-1, PMV>1)
perform a first air conditioning mode according to a temperature and activity
S50
S70
perform a second air conditioning mode according to concentrations of CO2, and O2
Return

FIG. 3

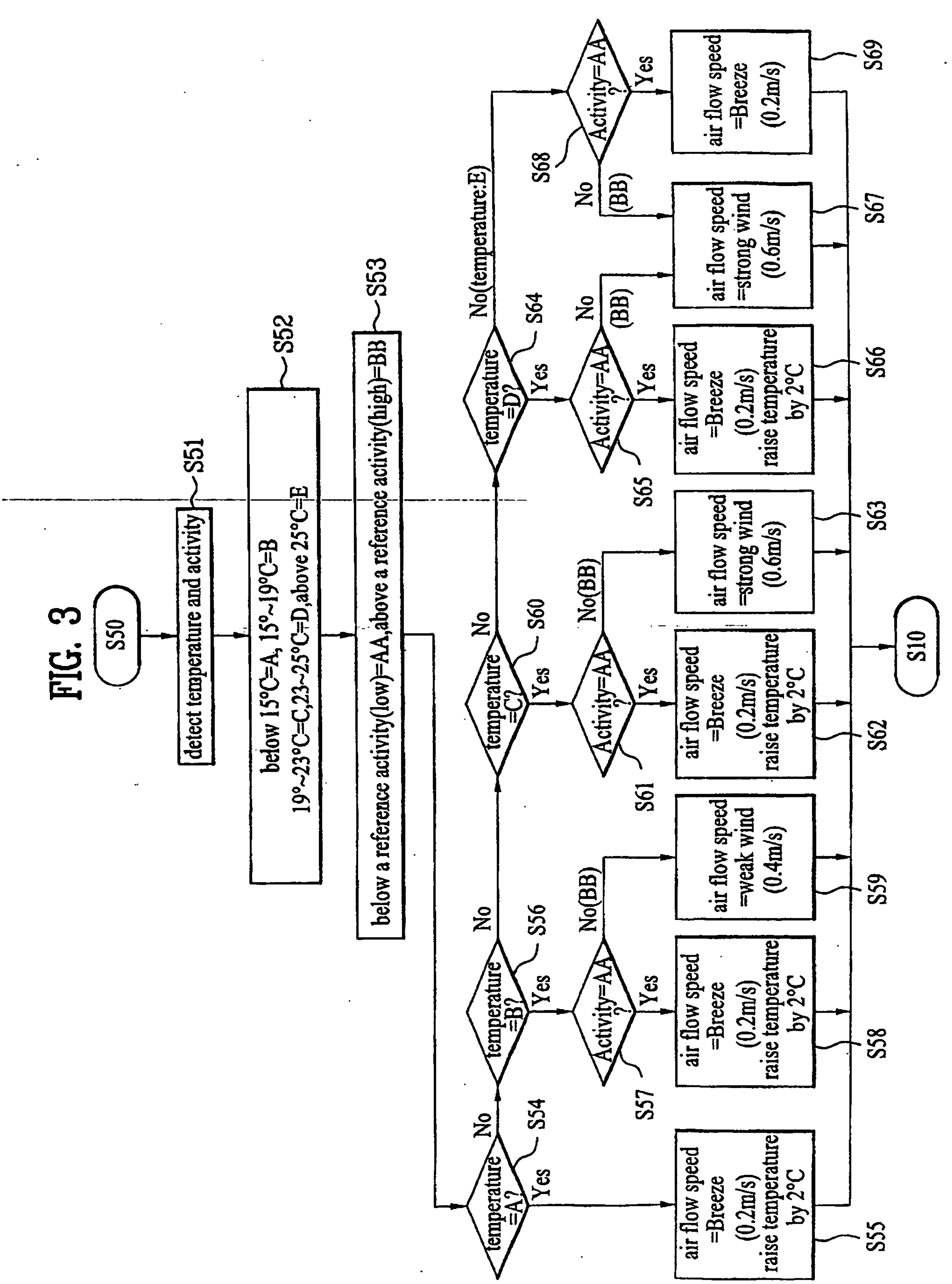
S50
detect temperature and activity
S51
below 15°C=A, 15°~19°C=B
19°~23°C=C,23~25°C=D,above 25°C=E
S52
below a reference activity(low)=AA,above a reference activity(high)=BB
S53
temperature =A?
S54
Yes
No
air flow speed =Breeze (0.2m/s) raise temperature by 2°C
S55
temperature =B?
S56
Yes
No
Activity=AA ?
S57
Yes
No(BB)
air flow speed =Breeze (0.2m/s) raise temperature by 2°C
S58
air flow speed =weak wind (0.4m/s)
S59
temperature =C?
S60
Yes
No
Activity=AA ?
S61
Yes
No(BB)
air flow speed =Breeze (0.2m/s) raise temperature by 2°C
S62
air flow speed =strong wind (0.6m/s)
S63
temperature =D?
S64
Yes
No(temperature:E)
Activity=AA ?
S65
Yes
No
(BB)
air flow speed =Breeze (0.2m/s) raise temperature by 2°C
S66
air flow speed =strong wind (0.6m/s)
S67
Activity=AA ?
S68
Yes
No
(BB)
air flow speed =Breeze (0.2m/s)
S69
S10

FIG. 4

<table>
<tr><td colspan="2" rowspan="2"></td><td colspan="5">indoor temperature</td></tr>
<tr><td>A</td><td>B</td><td>C</td><td>D</td><td>E</td></tr>
<tr><td rowspan="2">Activity</td><td>AA</td><td rowspan="2">air flow speed<br>=>breeze<br>raise temperature<br>by 2°C</td><td>air flow speed<br>=>breeze<br>raise temperature<br>by 2°C</td><td>air flow speed<br>=>breeze<br>raise temperature<br>by 2°C</td><td>air flow speed<br>=>breeze<br>raise temperature<br>by 2°C</td><td>air flow speed<br>=>breeze<br>maintain<br>a temperature</td></tr>
<tr><td>BB</td><td>air flow speed<br>=>weak wind<br>maintain<br>a temperature</td><td>air flow speed<br>=>strong wind<br>maintain<br>a temperature</td><td>air flow speed<br>=>strong wind<br>maintain<br>a temperature</td><td>air flow speed<br>=>strong wind<br>maintain<br>a temperature</td></tr>
</table>

FIG. 5

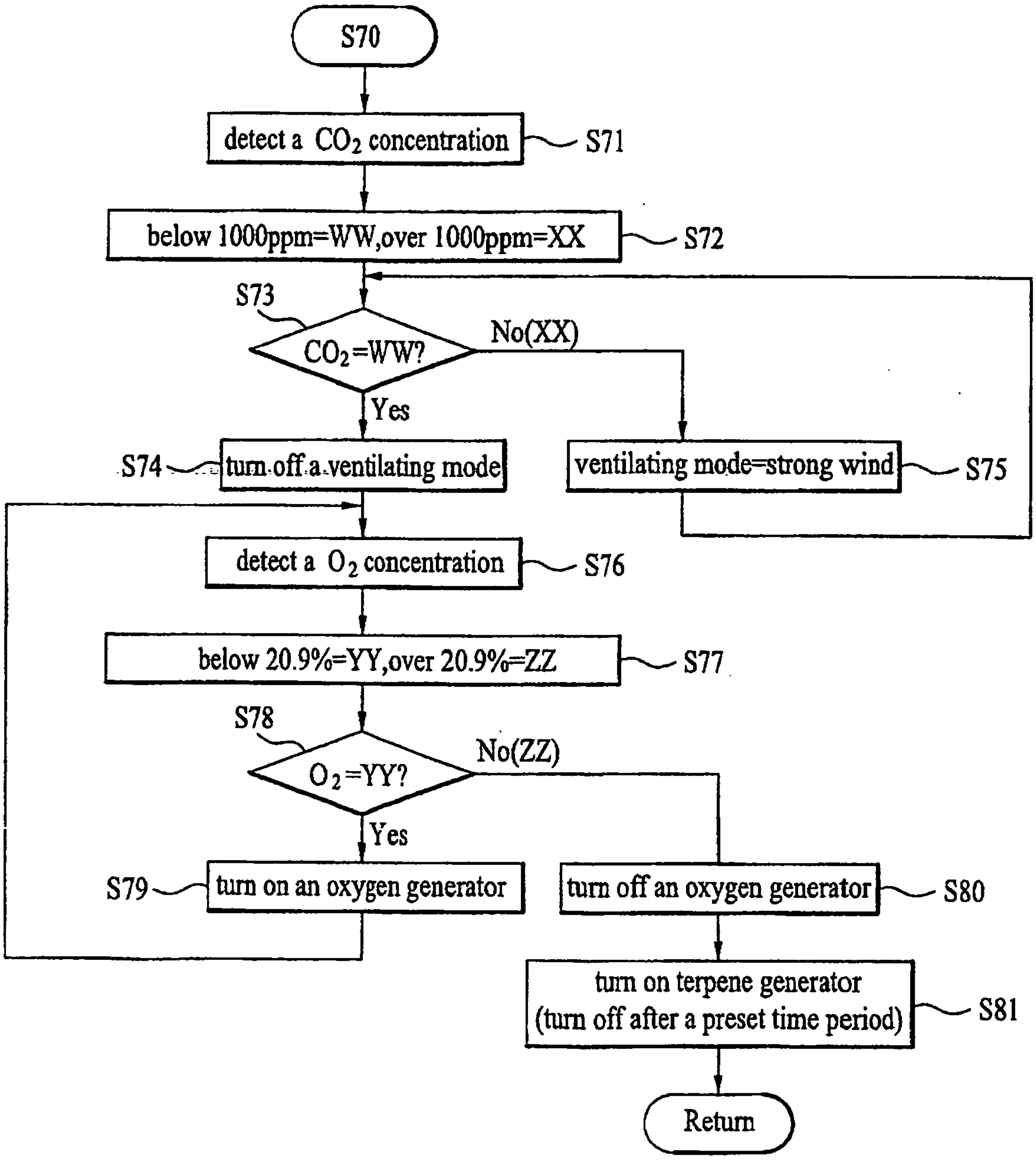
S70
detect a CO2 concentration
S71
below 1000ppm=WW,over 1000ppm=XX
S72
S73
CO2=WW?
No(XX)
Yes
S74
turn off a ventilating mode
ventilating mode=strong wind
S75
detect a O2 concentration
S76
below 20.9%=YY,over 20.9%=ZZ
S77
S78
O2=YY?
No(ZZ)
Yes
S79
turn on an oxygen generator
turn off an oxygen generator
S80
turn on terpene generator
(turn off after a preset time period)
S81
Return

# FIG. 6A

| Terpene | $CO_2$(ppm) | $O_2$(%) | PPIS(%) |
|---|---|---|---|
| × | 500 | 20.7 | 84 |
| × | 1000 | 20.7 | 80 |
| × | 1500 | 20.7 | 77 |
| × | 2000 | 20.7 | 74 |
| × | 2500 | 20.7 | 70 |
| × | 3000 | 20.7 | 67 |
| × | 3500 | 20.7 | 64 |
| × | 4000 | 20.7 | 60 |
| × | 4500 | 20.7 | 57 |
| × | 5000 | 20.7 | 54 |
| × | 500 | 20.9 | 87 |
| × | 1000 | 20.9 | 83 |
| × | 1500 | 20.9 | 80 |
| × | 2000 | 20.9 | 77 |
| × | 2500 | 20.9 | 73 |
| × | 3000 | 20.9 | 70 |
| × | 3500 | 20.9 | 67 |
| × | 4000 | 20.9 | 63 |
| × | 4500 | 20.9 | 60 |
| × | 5000 | 20.9 | 57 |
| × | 500 | 21.1 | 90 |
| × | 1000 | 21.1 | 86 |
| × | 1500 | 21.1 | 83 |
| × | 2000 | 21.1 | 80 |
| × | 2500 | 21.1 | 76 |
| × | 3000 | 21.1 | 73 |
| × | 3500 | 21.1 | 70 |
| × | 4000 | 21.1 | 66 |
| × | 4500 | 21.1 | 63 |
| × | 5000 | 21.1 | 60 |

# FIG. 6B

| Terpene | $CO_2$(ppm) | $O_2$(%) | PPIS(%) |
|---|---|---|---|
| ○ | 500 | 20.7 | 92 |
| ○ | 1000 | 20.7 | 88 |
| ○ | 1500 | 20.7 | 85 |
| ○ | 2000 | 20.7 | 82 |
| ○ | 2500 | 20.7 | 78 |
| ○ | 3000 | 20.7 | 75 |
| ○ | 3500 | 20.7 | 72 |
| ○ | 4000 | 20.7 | 68 |
| ○ | 4500 | 20.7 | 65 |
| ○ | 5000 | 20.7 | 62 |
| ○ | 500 | 20.9 | 95 |
| ○ | 1000 | 20.9 | 91 |
| ○ | 1500 | 20.9 | 88 |
| ○ | 2000 | 20.9 | 85 |
| ○ | 2500 | 20.9 | 81 |
| ○ | 3000 | 20.9 | 78 |
| ○ | 3500 | 20.9 | 75 |
| ○ | 4000 | 20.9 | 71 |
| ○ | 4500 | 20.9 | 68 |
| ○ | 5000 | 20.9 | 65 |
| ○ | 500 | 21.1 | 98 |
| ○ | 1000 | 21.1 | 94 |
| ○ | 1500 | 21.1 | 91 |
| ○ | 2000 | 21.1 | 88 |
| ○ | 2500 | 21.1 | 84 |
| ○ | 3000 | 21.1 | 81 |
| ○ | 3500 | 21.1 | 78 |
| ○ | 4000 | 21.1 | 74 |
| ○ | 4500 | 21.1 | 71 |
| ○ | 5000 | 21.1 | 68 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4873649 A